# EUROPEAN PATENT APPLICATION

(11) **EP 4 418 185 A1**
(43) Date of publication of application: **21.08.2024**
(21) Application number: 24158049.7
(22) Date of filing: 16.02.2024
(51) Int. Cl.: G06Q 20/02, G06Q 20/40

(54) **SYSTEM, METHOD AND APPARATUS FOR FASTER ACH TRANSFER PROCESSING**

(30) Priority: 20.02.2023 US 202318111637
(71) Applicant: Affirm, Inc., San Francisco, CA 94108 (US)
(72) Inventor: BACKMAN, Johan, San Francisco, 94108 (US); LOVELY, Ned Jackson, San Francisco, 94108 (US); RAFATI, Arman, San Francisco, 94108 (US); RAVAL, Chinmay, San Francisco, 94108 (US)
(74) Representative: Piotrowicz, Pawel Jan Andrzej

(57) **Abstract**

A method for facilitating early capture of automated clearing house (ACH) transfers associated with transactions may include providing a descriptor into an ACH file associated with a fund transfer between a customer and a merchant for a target transaction financed by the facilitation agent, initiating a lending limitation on financing available to the customer based on an amount of the target transaction until the target transaction is captured or a predetermined period of time has passed without receiving a notice of insufficient funds from a customer bank having a bank account of the customer from which an ACH transfer is requested by the ACH file, receiving bank account transaction data associated with candidate transactions from the bank account of the customer, employing a matching algorithm on the bank account transaction data to determine whether there is a match between the target transaction and one of the candidate transactions, and, responsive to determining the match before passage of the predetermined time, considering the target transaction to be captured and releasing the lending limitation.

## Description

### TECHNICAL FIELD

Example embodiments generally relate to financial industry technologies and, in particular, relate to apparatuses, systems, and methods for enabling Automated Clearing House (ACH) transfers to be more quickly accounted for with respect to managing borrower credit limits.

### BACKGROUND

The financial industry comprises many thousands of customers, vendors, lenders, borrowers, and other role players that all interact in various ways to enable customers to ultimately have access to goods and services provided by vendors. Credit and financial transactions have long been a way that individuals have managed point of sale transactions to ensure seamless transfer of funds from customers, or on their behalf, to vendors for relatively routine or small transactions. Meanwhile, obtaining a loan from a bank has long been the most common way of obtaining financing for non-routine or larger transactions.

In each of the cases above, a relatively rigid and pre-planned sequence of activities occurs before, during, and after the transaction is closed. The customer makes the decision up front as to which mechanism to employ, and the handling of the entire transaction after that initial decision is made follows existing and well-known paths to completion. While there is great flexibility in that many options are available to customers (particularly those with good credit), there is not much flexibility at all after the decision is made as to which option to select.

Credit cards and certain other lending vehicles may be useful tools for many customers. However, some customers can find themselves over extended either quickly or over a period of time based on the existing tools. This phenomenon has repeated itself over generations, and for millions of customers. Thus, there is now a deep desire on the part of many to create flexible and fair means of supporting customer purchasing activities that is both honest and transparent, and that also improves the lives of customers. Additionally, users may want a value card that is functionally dynamic supporting pay now transactions or installment loan transactions, which the user has the ability to dictate via an app or otherwise.

### BRIEF SUMMARY OF SOME EXAMPLES

In an example embodiment, a method for facilitating early capture of automated clearing house (ACH) transfers associated with transactions may be provided. The method may include providing a descriptor into an ACH file associated with a fund transfer between a customer and a merchant for a target transaction financed by the facilitation agent, initiating a lending limitation on financing available to the customer based on an amount of the target transaction until the target transaction is captured or a predetermined period of time has passed without receiving a notice of insufficient funds from a customer bank having a bank account of the customer from which an ACH transfer is requested by the ACH file, receiving bank account transaction data associated with candidate transactions from the bank account of the customer, employing a matching algorithm on the bank account transaction data to determine whether there is a match between the target transaction and one of the candidate transactions, and, responsive to determining the match before passage of the predetermined time, considering the target transaction to be captured and releasing the lending limitation.

In another example embodiment, an apparatus for facilitating early capture of automated clearing house (ACH) transfers associated with transactions may be provided. The apparatus may include processing circuitry configured for may include providing a descriptor into an ACH file associated with a fund transfer between a customer and a merchant for a target transaction financed by the facilitation agent, initiating a lending limitation on financing available to the customer based on an amount of the target transaction until the target transaction is captured or a predetermined period of time has passed without receiving a notice of insufficient funds from a customer bank having a bank account of the customer from which an ACH transfer is requested by the ACH file, receiving bank account transaction data associated with candidate transactions from the bank account of the customer, employing a matching algorithm on the bank account transaction data to determine whether there is a match between the target transaction and one of the candidate transactions, and, responsive to determining the match before passage of the predetermined time, considering the target transaction to be captured and releasing the lending limitation.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for faster processing of ACH transactions according to an example embodiment;
FIG. 2 illustrates a functional block diagram of a payments platform according to an example embodiment;
FIG. 3 illustrates a block diagram showing control flow associated with faster capture of funds associated with ACH transactions in accordance with an example embodiment;
FIG. 4 illustrates a block diagram showing system interactions in accordance with an example embodiment; and
FIG. 5 illustrates a block diagram of a method for facilitating early capture of automated clearing house (ACH) transfers associated with transactions in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

As further discussed in more detail below, decisions by a payments platform regarding whether to approve a particular transaction are typically made at a particular point in time, and are dependent on the information that is considered germane to making the decisions at that time. Thus, for the same user, a new decision is made for each transaction. To the user then, the importance of having the information being considered with respect to making an approval decision as accurate as possible is clearly important. In this regard, being at the checkout with desired goods or services, and having the transaction denied can be both embarrassing and frustrating for customers. Particularly when, from the user's perspective, the denial is not warranted, the user may seek a different payments platform elsewhere to avoid such unwarranted denials.

One example of a situation in which a user may fall victim to what may be perceived as an unwarranted denial may arise in the context of transactions taking an extended time to clear or settle. For example, a payments platform may intiate several ACH pull requests from a customer's bank account in order to settle various transactions that were approved. While those ACH payments process or clear, the customer may unknowingly have a limited transaction balance with the payments platform. For additional context, ACH payments are a form of electronic bank transaction made using a network (i.e., the ACH) that is formed from a system of computers that communicate with each other to make and receive payments. For each transaction there is one computer at the sending end to send a request for payment, and another computer at the receiving end to accept the request.

Although fairly standard as a method of transferring money, the movement of the money using ACH is relatively slow. In this regard, a payments platform may submit a file containing all of the transfers that are to be performed to initiate the process, but there is generally no confirmation received through the system to indicate whether or not each transaction has gone through successfully. The only communication received from the system is generally received in the event of a failure for either insufficient funds or an account being closed, for example.

The fact that there is no confirmation for successful transfers can create a problem for the payments platform (and consequently for a user seeking approval for a financial transaction) since it is not clear what the current status of the user's account(s) may be at the time an approval decision needs to be made. A payments platform must therefore balance the risk of approving transaction against the uncertainty of the accuracy of account information. One common way to effect such a balance has been to wait a predetermined period of time, such as three business days, after an ACH payment to consider the corresponding money involved in the transfer to be received. This, however, can lock up further user spending in the delay period and create the potential for frustration noted above.

As an example, if a user has $500 in his/her bank account, they may normally be a transaction limit based on a predetermined percentage of that amount. If the predetermined percentage is 80%, then for this example, the user may have a transaction limit of up to $400. If the user makes a $300 purchase, the user may reasonably expect that he/she has $200 in his/her account, and may therefore expect to for the transaction limit with the payments platform to be updated to up to $160 (i.e., 80% of the remaining $200 balance). However, that is not how the system works.

If the $300 transaction is handled by ACH, the ACH pull request from the user's account may be initiated on the evening of the transaction. Assuming the transaction limit before this purchase was $500, the transaction limit will be now be $100 (assuming transaction limit - purchase amount = new transaction limit). However, once the ACH requested is reflected in the borrower's account (i.e., new account balance $200) but before the payments platform has confirmation of the success, the payments platform may be believe that the transaction may be subject to NSF (i.e., new account balance - pending transactions = -$140), as the payments platform has no way to accurately identify what transactions are associated with the new account balance. Thus, because the payments platform is ensure if the previous transaction will clear, until the wait period (e.g., three business days) passes, the user may not be able to spend any part of the actual balance of $200 in his/her account.

As can likely be appreciated from the description above, the potential for inconsistency in making approval decisions can be very frustrating for users. Moreover, causing user frustration can dissuade users from establishing loyalty to any particular brand or service. Given that the nature of ACH transfers is outside the control of the payments platform, the payments platform must consider other creative options for improving the situation described above that are fully within the control of the payments platform. Accordingly, some example embodiments may enable the provision of technical means by which to provide a faster, but also trustworthy and accurate, way to account for ACH payments and thereby have a more accurate account balance for the user.

Some example embodiments described herein provide for a payments platform that can be instantiated at an apparatus comprising configurable processing circuitry. The processing circuitry may be configured to execute various processing functions on financial data using the techniques described herein. The payments platform may, for example, be configured to provide a way to determine, on an individual user-level basis, whether to approve or deny transactions associated with a particular user. Thus, for example, an account balance check may be made on the user's bank account.. Thereby giving the lender technical means to obtain information that enables the lender to make educated inferences about the likely status of recent or contemplated ACH transfers. Thus, example embodiments may not only enable the user to approve financial transactions when others may not be able to (without an appreciable or unacceptable increase in risk) but the user may be incented to exhibit brand loyalty to the payments platform and build additional financial or lending opportunities and expect more consistency in approval of financial transaction requests.

Example embodiments may be employed in multiple contexts, which may include financial transaction processing decisions made at checkout or time of purchase, or responsive to a customer request independent of a specific purchase. In relation to financial transactions decisions, macroeconomic conditions and seasonality may have an impact on the business of a financial institution or organization. In response to these factors, and various tuning efforts that may normally be employed, a typical financial transaction model may utilize all inputs and factors to make a financial transaction decision (i.e., whether to approve or deny a transaction or advance funds for a financial transaction) for a user independent of any prior request by the same user, or recent (or repeated) user behavior. Instead, the financial transaction model may be expected to consider the amount of the financial transaction, the credit score of the user, the amount of money in various bank accounts of the user, or numerous other factors.

As noted above, this can leave a user (or payments platform) who recently engaged in a transaction that involved an ACH transfer exposed to a window of inability to access funds until the ACH transfer clears, which is an event that is assumed since there is no positive confirmation of it that is issued. Normally, a wait period is instituted, but for the reasons noted above having such a wait period is undesirable. Thus, example embodiments may enable, through the introduction to technical cues that can be embedded into information exchanges that already exist, the ability of the payments platform to use those technical cues to identify when certain transactions involving ACH transfers can be captured or cleared sooner. The wait period may therefore be reduced substantially from perhaps three business days or so, which is conventionally quite normal, to a period of less than a single day, or even a few hours. Example embodiments therefore use technical means embedded into information exchange, to further enable technical computation or calculation that speeds up the entire process massively (e.g., by greater than a factor of three). This acceleration in processing, which speeds up the entire system, may be game changing in terms of customer satisfaction while also driving increased transaction volume, without a corresponding increase in risk. The user can therefore experience the benefits of continued positive (e.g., relationship enhancing) behaviors, and the payment platforms can build a loyal customer base of satisfied users.

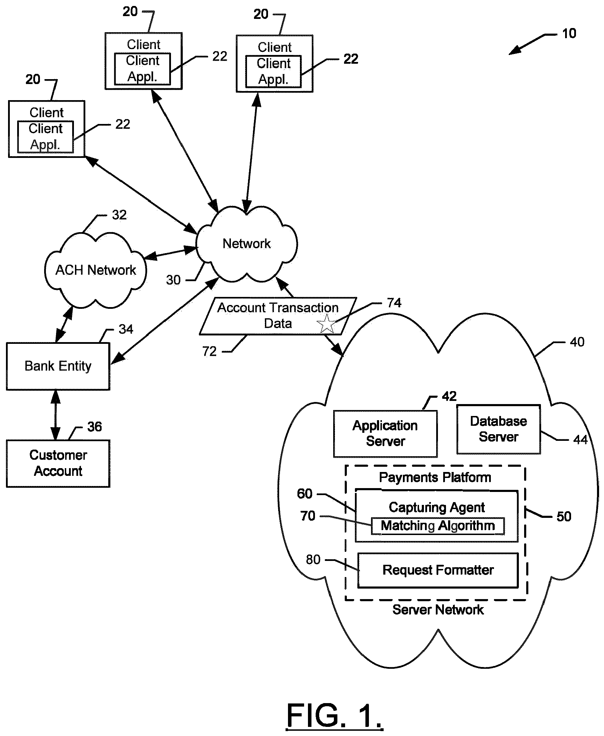

An example embodiment of the invention will now be described in reference to FIG. 1, which illustrates an example system in which an embodiment of the present invention may be employed. As shown in FIG. 1, a financial management system 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single computer or computing device that is capable of executing software programmed to implement example embodiments. Thus, in some embodiments, one or more of the clients 20 may be associated with an organization (e.g., a merchant company) and may be located in different business units, branch offices, or other locations. In other cases, the clients 20 may be associated with individual users (i.e., customers) that may wish to interact with other clients 20 and/or a financial institution or entity. In general, the clients 20 may be terminals or platform entities that are capable of executing example embodiments, and there could be as few as one, or a host of such terminals or entities.

In one example use case, the client 20 may be a merchant terminal used to inform the payments platform 50 of a transaction initiated by a customer with the merchant via a value card (e.g., a credit or debit card) issued by or serviced by the borrower or facilitator. In another example use case, the client 20 may be a cell phone or computer of the customer attempting to initiate a transaction online to purchase a good or service provided by the merchant, and the client application 22 may be a website of the merchant via which the customer provides value card or other payment method details to apply for credit from the borrower or facilitator via the payments platform. Example embodiments may, in some cases, specifically apply to financial transactions.

Thus, for example, in some cases each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, the network 30 may include or also be operably coupled to an automated clearing house (ACH) network 32 to which one or more instances of a bank entity 34 are also operably coupled. The bank entity 34 (or each of multiple such entities) may include various bank accounts associated with various customers. Such bank accounts may be referred to as customer accounts and customer account 36 in FIG. 1 is one such example of these customer accounts. As noted above, the customer may facilitate a financial transaction to purchase a good or service of a merchant. For a purchase, the merchant (or customer) may inform the payments platform 50 of the desired transaction so that the customer can arrange the facilitator to transfer funds to the merchant on his/her behalf to obtain the good or service (e.g., from a for the benefit of (FBO) account of the facilitator, and then arrange to transfer funds from the customer account 36 to facilitator. This transfer of funds from the customer account 36 may occur via the ACH network 32 by provision of an ACH file (or request) submitted by the facilitator to the bank entity 34. The bank entity 34 processes the request and, if sufficient funds are available, transfers money in the amount of the transaction to the facilitator.

In an example embodiment, devices to which the clients 20 may be coupled via the network 30 may include one or more application servers (e.g., application server 42), and/or a database server 44, which together may form respective elements of a server network 40. Although the application server 42 and the database server 44 are each referred to as "servers," this does not necessarily imply that they are embodied on separate servers or devices. As such, for example, a single server or device may include both entities and the database server 44 could merely be represented by a database or group of databases physically located on the same server or device as the application server 42. The application server 42 and the database server 44 may include hardware and/or software for configuring the application server 42 and the database server 44, respectively, to perform various functions. As such, for example, the application server 42 may include processing logic and memory enabling the application server 42 to access and/or execute stored computer readable instructions for performing various functions. In an example embodiment, one function that may be provided by the application server 42 may be the provision of access to information and/or services related to payments platform 50, and more particularly relating to facilitating financial computations and calculations related to decisions associated with processing financial transactions . For example, the application server 42 may be configured to provide (via the payments platform 50) execution of instructions, and storage of information descriptive of events or activities, associated with the payments platform 50 and the execution of a financial computations, calculations and modeling on behalf of a user of the system 10 located at one of the clients 20, or interacting with a user located at one of the clients 20, in real time. In some cases, the financial transaction may include obtaining temporary funds transfer servicing associated with financial transactions, and the activities associated therewith may include the provision of a value card or account number that can be used to facilitate financial transactions detailing information required by the facilitator (and operator of the payments platform 50) to determine whether transactions can be approved or denied or other products can be provided to the customer based on information provided. In some cases, the information provided may be provided by the customer. However, in others, the bank entity 34 may be contacted to determine a status of the customer account 36 (e.g., an account balance therein) to determine how much can safely be advanced on behalf of the customer to support financial transactions.

In some embodiments, the payments platform 50 may be a technical device, component or module affiliated with the lender or an agent of the lender. Thus, the payments platform 50 may operate under control of the facilitator or agent of the facilitator to be a technical means by which to carry out activities under direction of the facilitator or employees thereof. The facilitator may, in some cases, be a facilitator of a transaction between the user (or customer) and a merchant, where such facilitation includes the advancement of funds, provision of a loan or similar to the customer . The facilitator may, in effect, act via the operation of the payments platform 50 via configuration of various decision making components thereof. Thus, in some cases, the payments platform 50 may effectively act as a facilitation agent.

In some embodiments, the clients 20 may access the payments platform 50 services, and more particularly contact the payments platform 50 online and utilize the services provided thereby. However, it should be appreciated that in other embodiments, an application (e.g., the client application 22) enabling the clients 20 to interact with the payments platform 50 (or components thereof) may be provided from the application server 42 (e.g., via download over the network 30) to one or more of the clients 20 to enable recipient clients 20 to instantiate an instance of the client application 22 for local operation such that the payments platform 50 may be a distributor of software enabling individual users to utilize the payments platform 50. Alternatively, another distributor of the software may provide the client 20 with the client application 22, and the payments platform 50 may communicate with the client 20 (via the client application 22) after such download.

In an example embodiment, the client application 22 may therefore include application programming interfaces (APIs) and other web interfaces to enable the client 20 to conduct operations as described herein via the payments platform 50. The client application 22 may include a series of control consoles or web pages including a landing page, onboarding services, activity feed, account settings (e.g., user profile information), transaction management services, payment management services and the like in cooperation with a service application that may be executed at the payments platform 50. Thus, for example, the client application 22 may enable the user or operator to articulate and submit queries, initiate and pay for transactions, and/or the like using the payments platform 50.

In an example embodiment, the application server 42 may include or have access to memory (e.g., internal memory or the database server 44) for storing instructions or applications for the performance of various functions and a corresponding processor for executing stored instructions or applications. For example, the memory may store an instance of the payments platform 50 configured to operate in accordance with an example embodiment of the present invention. In this regard, for example, the payments platform 50 may include software for enabling the application server 42 to communicate with the network 30 and/or the clients 20 for the provision and/or receipt of information associated with performing activities as described herein. Moreover, in some embodiments, the application server 42 may include or otherwise be in communication with an access terminal such as any one of the clients 20 (e.g., a computer including a user interface) via which individual operators or managers of the entity associated with the facilitation agent may interact with, configure or otherwise maintain the payments platform 50. Thus, it should be appreciated that the functions of the payments platform 50 can be conducted via client-server based interactions involving communications between clients 20 and the server network 40, or may be conducted locally at one of the clients 20 after an instance of the payments platform 50 is downloaded (e.g., via or as the client application 22) locally at the corresponding one of the clients 20.

As such, the environment of FIG. 1 illustrates an example in which provision of content and information associated with the financial industry may be accomplished by a particular entity (namely the payments platform 50 residing at the application server 42 or at one of the clients 20). Thus, the payments platform 50 may be configured to handle provision of content and information that are secured as appropriate for the individuals or organizations involved and credentials of individuals or organizations attempting to utilize the tools provided herein may be managed by digital rights management services or other authentication and security services or protocols that are outside the scope of this disclosure.

As noted above, the payments platform 50 may operate to enable the user associated with a given one of the clients 20 to setup an account (i.e., a user account) with an entity (e.g., a facilitator) that operates the payments platform 50. After account setup, the user may initiate transactions with various merchants and pay for the transactions via the entity in association with the user account. The user account may, in some cases, be linked to the customer account 36 to facilitate access by the facilitator to the customer account 36 in association with conducting financial transactions. In this context, for example, the amount of money in the customer account 36 may be used by the facilitator to determine approval or denial of financial transactions on behalf of the customer with respect to a particular merchant s. The facilitator may then attempt to reimbursed the amount of the financial transactions from the customer account 36 via an ACH pull request.

In a typical case, the facilitator may be enabled to get a report from the bank entity 34 as to the status of the customer account 36 periodically. Obviously, the facilitator would not want to approve a financial transaction larger than the current account balance in the customer account 36. Although perhaps a loan could be extended in such a situation, that eventuality is outside the scope of this disclosure. Instead, assume the facilitator is only facilitating financial transactions. However, even with this assumption in place, and the simple consideration of approving a financial transaction larger than the account balance there remains the problem that the facilitator cannot know in real time what other transactions or money transfers are planned or already being processed that may add money into or take money from the customer account 36. Thus, the facilitator must appreciate that the account balance fluctuates.

In some cases, to account for this natural and normal fluctuation of the account balance of the customer account 36, the facilitator may place a predetermined transaction limit as a function of the account balance at any given time to define a limit to the exposure risk the facilitator is willing to accept. For example, the predetermined transaction limit may be 80% (although any suitable value reflecting the risk tolerance of the facilitator may be chosen). In such a case, for example, if the customer has $500 as the account balance in the customer account 36, the facilitator may allow the customer to conduct financial transactions supported by the facilitator in the amount of $400 (i.e., 80% of $500). If the customer employs the value card (e.g., debit card) or otherwise attempts a financial transaction online in the amount of $300, the facilitator may approve the transaction and transfer funds to the corresponding merchant accordingly. The facilitator may also generate an ACH file at some predetermined time after the transaction to request transfer of $300 from the customer account 36 to the facilitator to settle the transaction. The bank entity 34 may take the funds out on the same day (in a best case scenario) and leave a visible account balance of $200. However, as noted above, ACH transactions may take days to be completely resolved, and it is possible that the customer account 36 may have other transfers out scheduled ahead of the financial transaction which, if executed, may leave the customer account 36 short of funds when the ACH pull request from the facilitator arrives. This situation would result in an insufficient funds notification being sent to the facilitator, and the facilitator would not receive (at least at this time) the money needed to settle the financial transaction.

In order to guard against this, particularly with respect to subsequent financial transactions the customer may attempt to engage in, the facilitator generally does not consider fund transfers by ACH to be "captured" (or assumed to be successfully transferred) until three business days have passed on the assumption that any insufficient funds notification would have been received by that time. This delay in considering funds captured necessarily imposes a transaction limitation on the customer account 36, and that limitation is often extended as long as three business days. Thus, if no insufficient funds notification is received in three business days, the corresponding funds requested by ACH are considered captured at the three business day mark and no longer need to be considered with respect to the lending limitation.

As can be appreciated from the descriptions above, the transaction limitation is a necessary part of responsible risk management. However, if the period of time that the transaction limitation is in place could be reduced, without increasing risk, that would be a highly desirable outcome. The payments platform 50 may therefore desirably be upgraded by technical means to enable such reduction in the time period that the transaction limitation is in place, again without increasing risk.

Example embodiments may accomplish this by employing a capturing agent 60 that receives account transaction data 72 from the bank entity 34, and employs a matching algorithm 70 described in greater detail below in order to determine whether any of the candidate transactions that are described in the account transaction data 72 can be assumed (e.g., with a relatively high degree of confidence or accuracy) to correlate to ACH files submitted in association with a target transaction between the customer and a merchant. If the capturing agent 60 can determine a match (via the matching algorithm 70) then the target transaction can immediately be considered to be captured, and the transaction limit associated with that target transaction can be removed. This restores the customer's ability to execute additional financial transactions s that are presumably limited only by the actual or current account balance (with the predetermined debit limit applied thereto, of course) instead of being further limited by the lending limit associated with the target transaction. Thus, for example, if the customer has $500 as the account balance in the customer account 36, the facilitator may allow the customer to conduct financial transactions supported by the facilitator in the amount of $400 (i.e., 80% of $500). If the customer employs the value card (e.g., debit card) or otherwise attempts a financial transaction (e.g., a debit transaction) online in the amount of $300, the facilitator may approve the transaction and transfer funds to the corresponding merchant accordingly. The facilitator may also generate an ACH file at some predetermined time after the transaction to request transfer of $300 from the customer account 36 to the facilitator to settle the transaction. The bank entity 34 may take the funds out on the same day (in a best case scenario) and leave a visible account balance of $200. The $300 transfer amount would normally be counted against the $200 balance until capture. However, as noted above, if the facilitator can match via the matching algorithm described above for the $300 target transaction, then the $300 amount can immediately be considered captured, and the remaining account balance of $200 can actually be further transacted against (e.g., leaving $160, or 80% of $200 available for further use via the value card.

In some cases, to facilitate the matching described above, a descriptor 74 may be inserted into all transactions processed by the facilitator. Thus, every instance of the target transaction that the facilitator supports for every customer may be supported in such a way that the descriptor 74 is inserted into the ACH file of the ACH pull request. To accomplish this, a request formatter 80 may also be provided at the payments platform 50.

Thus, the payments platform 50 may also enable, in association with the user attempting a financial transaction, requests f to run modeling calculations in association with the payments platform 50. In some example embodiments, the client application 22 may be used in connection with running queries, models, or calculations that are then used as the basis for interactions between the customer and merchants, and/or the facilitator/agent, or between decision makers within the organization in relation to services provided to customers, or policy decisions and budgeting that is to be done by the organization under control of the payments platform 50. In this regard, for example, the client application 22 may be used to engage (e.g., via a website and corresponding APIs) with the payments platform 50 to select individual products, financial transactions, loans, or types of loans to be evaluated using services associated with the payments platform 50. The payments platform 50 may prompt the client 20 to provide product or transaction details, or other information associated with the financial transaction that is being evaluated. In other words, the client 20 may provide a user interface function for interacting with the payments platform 50 to identify the information that will be evaluated using the payments platform 50.

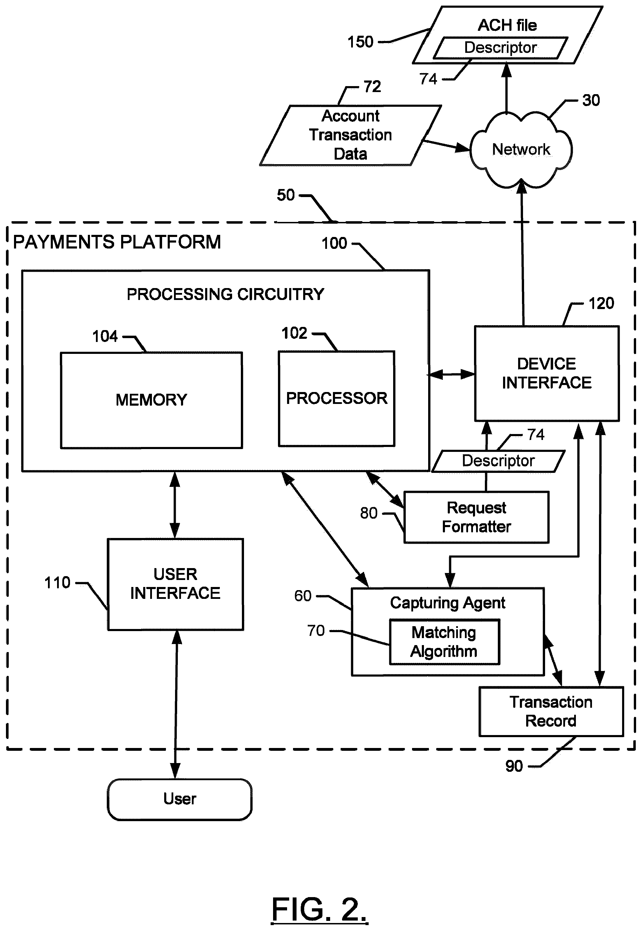

Regardless of how the queries, calculations or modeling activities are initiated, the payments platform 50 of FIG. 1 may be used to manage execution of such activities. Each of these activities may have its own respective timing and calculations and communications that are facilitated by the payments platform 50 and various components of the payments platform 50 may be conducted in parallel. The components, which may be functional modules that operate via API or function calls to respective segmented platforms or a monolith or other collection of rules, policies, instructions, or the like. In an example embodiment, the payments platform 50 may include (or be operably coupled to) one or both of the capturing agent 60 and the request formatter 80. Some of the structures and operations associated with the capturing agent 60 and the request formatter 80 of an example embodiment will be described in reference to FIG. 2.

FIG. 2 shows certain elements of an apparatus for provision of the payments platform 50 or other processing circuitry according to an example embodiment. The apparatus of FIG. 2 may be employed, for example, as the payments platform 50 itself (and/or the capturing agent 60 and the request formatter 80) operating at, for example, a network device, server, proxy, or the like (e.g., the application server 42 or client 20 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 42 or the client 20) or by devices in a client/server relationship (e.g., the application server 42 and one or more clients 20). Thus, although FIG. 2 illustrates the payments platform 50 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating decision making regarding support for financial transactions supported by the technical improvements of an example embodiment is shown. In this regard, the payments platform 50 may be configured to perform analysis, modeling, or other determinations based on the signaling and/or the information provided to determine whether to approve a financial transaction on behalf of a customer and, if so, conduct the corresponding transfers of money needed to do so. The apparatus may be an embodiment of the payments platform 50 or a device or component thereof including, for example, the capturing agent 60 and the request formatter 80. As such, configuration of the apparatus as described herein may transform the apparatus into the payments platform 50. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In some embodiments, the processor 102 may be embodied as a central processing unit (CPU) or a graphics processing unit (GPU). In situations where the processing circuitry 100 is embodied as a server or at a remotely located computing device, the user interface 110 may be disposed at another device (e.g., at a computer terminal) that may be in communication with the processing circuitry 100 via the device interface 120 and/or a network (e.g., network 30). Thus, in some cases, the connection of the user to the user interface 110 may actually occur via the network 30.

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, the user interface 110 may be remotely located.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 44) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the payments platform 50, the capturing agent 60 and/or the request formatter 80, each of which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the payments platform 50, the capturing agent 60 and/or the request formatter 80 as described below.

The capturing agent 60 and the request formatter 80 may each be configured to include tools to facilitate execution of the respective functions described herein. The tools may be provided in the form of various modules (or submodules) that may be instantiated by configuration of the processing circuitry 100. Thus, for example, the capturing agent 60 may include tables, logs or the like for storing data to be evaluated, algorithms and/or the like that can operate on data to be evaluated, and various execution modules specifically configured to manipulate data and/or provide for the transmission and/or reception of messages or instructions needed to carry out respective functions of the capturing agent 60 as described herein based on inputs received. The inputs may include many different signals that may be used to balance risks associated with supporting a financial transaction. These signals may include identity information indicating an identity of the user (or the user's account), entity information that identifies the facilitator (or other entity facilitating a candidate transaction), date information, information indicating an amount of a transaction, and other information enabling a determination as to whether a target transaction can be matched to one of the many transactions that may be included in the account transaction data 72. However, numerous other signals may also be included.

Meanwhile, the request formatter 80 may be configured to utilize the format or protocol of the ACH network 32, which may be a rigid format with a limited number of characters, and corresponding fields of predetermined usage, in order to exploit the format or protocol to encode certain information therein. In this regard, for example, the request formatter 80 may encode the descriptor 74 mentioned above into each and every ACH file (or request) that is generated on behalf of or by the facilitator (e.g., via the payments platform 50). The descriptor 74 of some examples may include characters disposed in a particular field or location having a corresponding meaning that is determinable relatively quickly by the capturing agent 60 when the descriptor 74 is recognized or extracted from account transaction data 72 that will report on transactions handled by the banks using ACH transactions. Thus, for example, the descriptor 74 may be inserted into an ACH file 150, and information provided therein (if not the entire descriptor 74) may be expected to show up in the account transaction data 72 for corresponding transactions since the descriptor 74 follows formatting rules for the ACH network 32 that may increase the likelihood of the information provided therein not being excised from the account transaction data 72.

In an example embodiment, the descriptor 74 may be inserted into a batch header of the ACH file 150. In an example embodiment, the batch header may include a first portion including an entity identifier, and a second portion including an encoded string associated with the ACH file 150. Within this context, providing the descriptor 74 into the batch header of the ACH file 150 may include providing the descriptor 74 as a predetermined formatting of the encoded string. In some example embodiments, the predetermined formatting may identify the facilitator specifically in the first portion of the batch header, and identify a date of the ACH transfer to which the descriptor 74 pertains in the second portion of the batch header.

As noted above, in an example embodiment, the capturing agent 60 may include or host the matching algorithm 70. When the account transaction data 72 is received (e.g., via the network 30 or ACH network 32), the account transaction data 72 may be stored in a transaction record 90. The transaction record 90 may, in some cases, be a portion of the memory 104, and may store, in a consistently structured way, information associated with candidate transactions received in the account transaction data 72. The transaction record 90 may also store information associated with target transactions, which have been facilitated by the facilitator. In both cases, the transactions (candidate and target) may be stored for only a limited period of time (e.g., about 3 -4 days).

The matching algorithm 70 may be configured to access the transaction record 90 and compare entries therein to try to determine whether a match exists (or is likely to exist) between one of the candidate transactions of the account transaction data 72 and one of the financial transactions supported by the facilitator for a customer associated with the customer account 36 of FIG. 1. This may be done for every financial transaction, every customer, and every customer account with which the facilitator is associated. Thus, it may be appreciated that such determinations are handled in high volumes and either continuously, periodically, or at predetermined times.

In an example embodiment, the matching algorithm 70 may examine various details of candidate transactions relative to one or more target transactions to determine a match therebetween. Those details may vary in different example embodiments. However, in some cases, an initial inquiry may be made relatively simply regarding whether the candidate transaction is even associated with any activity of the facilitator based on an entity identifier that may be provided in the account transaction data 72 for each candidate transaction. If the entity identifier is not the facilitator's, the entire transaction can be ignored relative to any further comparison for matching purposes. To the extent the descriptor 74 comes through in the account transaction data 72, or at least corresponding information otherwise provided in the descriptor 74 is determinable from the account transaction data 72, the matching efforts of the matching algorithm 70 may be enhanced or facilitated. In this regard, for example, the entity identifier may be provided in the descriptor 74 extracted from the account transaction data 72, or in information otherwise provided in the account transaction data 72 in some cases.

Beyond the entity identifier, other details may also be useful for determining correspondences that may be indicative of a match. For example, the candidate transactions may determine the match responsive to determining a first correspondence between the entity identifier of the one of the candidate transactions and an identity of the facilitation agent, and applying a transaction specific correspondence check based on whether the descriptor 74 is available in association with the target transaction. In some cases, the transaction specific correspondence check may include, responsive to the descriptor 74 being available, determining a second correspondence in amount of the target transaction and the one of the candidate transactions, determining a third correspondence between date of the target transaction and the date of the ACH transfer, determining a fourth correspondence between a user identifier associated with the target transaction and an identity of the customer, and determining the match responsive to the first, second, third and fourth correspondences. Alternatively, the transaction specific correspondence check may include, responsive to the descriptor 74 being available, determining a second correspondence in amount of the target transaction and the one of the candidate transactions, determining a third correspondence between a user identifier associated with the target transaction and an identity of the customer, and determining the match responsive to the first, second, and third correspondences. Thus, with or without the descriptor 74 correspondence (and matching) may be determined. However, the descriptor 74, or information provided therein, may enhance the speed and/or accuracy of such determinations.

In an example embodiment, efforts of the capturing agent 60 may be recorded regardless of whether or not they are successful. In this regard, by recording both successful and unsuccessful matching attempts, along with corresponding reasons for each, the capturing agent 60 may be updated or improved over time. In some embodiments, the capturing agent 60 may further include a machine learning module that may employ machine learning on the recorded data regarding successful and unsuccessful matching efforts to identify patterns in failure and/or success that may be employed for tuning of the capturing agent 60 to improve performance. More specifically, the matching algorithm may be updated, or suggested updates may be provided to an operator of the system for adoption or consideration with respect to programming modifications to the matching algorithm 70. Thus, for example, the transaction record 90 and/or the memory 104 (if different) may be used to log each failure to determine the match along with a corresponding failure reason in a failure log. Similarly, the transaction record 90 and/or the memory 104 may also be used to log each success in determining the match along with a corresponding success reason in a success log.

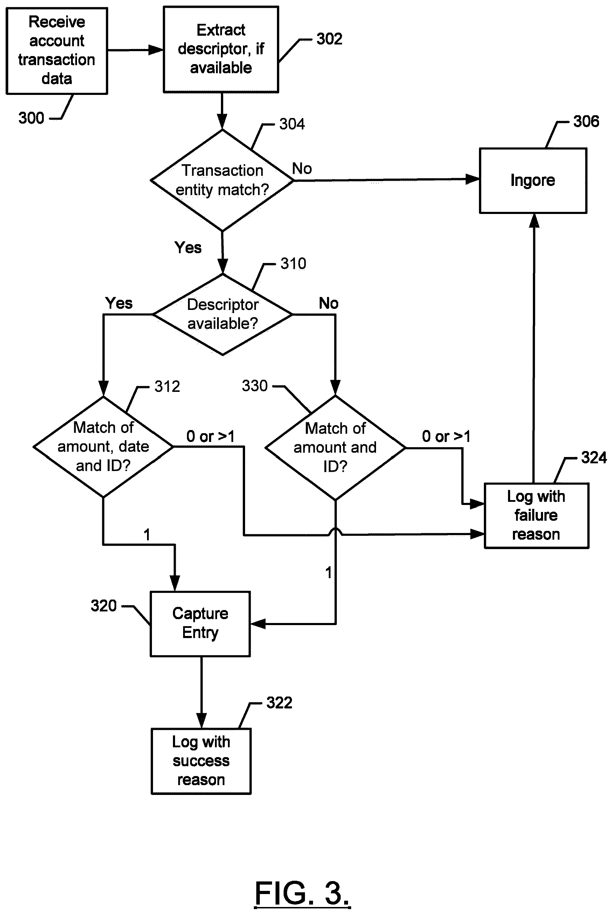

FIG. 3 illustrates a block diagram showing control flow associated with operation of the payments platform 50 in accordance with an example embodiment. As shown in FIG. 3, the payments platform 50 may receive account transaction data at operation 300. Thereafter, at operation 302, the descriptor (or information otherwise encoded therein) may be extracted, if available. A determination may then be made at operation 304 as to whether there is an entity match (e.g., from the entity identifier) for each individual one of the transactions in the account transaction data. If there is no identity match, the corresponding transaction can be ignored at operation 306. However, for every transaction for which there is an entity match, a further consideration of the matching algorithm 70 may be accomplished as further illustrated in FIG. 3, and the corresponding transaction may be considered to be a candidate transaction.

In this regard, for example, a determination may be made as to whether the descriptor was extracted for the corresponding transaction at operation 310. If the descriptor was indeed extracted, then a match may be determined with respect to the amount of the transaction, the date of the transaction and a user identifier (or user ID that corresponds to each respective customer) by comparing a target transaction (or a plurality of target transactions) to each entity matched transaction in the account transaction data. If there is exactly one match for all of the parameters examined between one target transaction and one candidate transaction from the account transaction data, then the corresponding transaction for which the exact match was determined may be identified as a captured entity at operation 320. The success may then be logged along with a corresponding reason for the success at operation 322.

However, if there are no matches across all three parameters examined in operation 312, or if there are more than one candidate transactions that match a particular target transaction, then a failure to match must be recorded, and the failure may be logged along with the corresponding reason at operation 324.

If at operation 310 there was no descriptor noted in the candidate transaction, it may still be examined for matching. In this regard, at operation 330 a determination may be made as to whether there is a match in the amount of the transaction and the user identifier. If there is exactly one match for all of the parameters examined at operation 330 between one target transaction and one candidate transaction from the account transaction data, then the corresponding transaction for which the exact match was determined may be identified as a captured entity at operation 320 and the success may then be logged along with a corresponding reason for the success at operation 322 as discussed above. Alternatively, if there are no matches or more than one match, as noted above, the failure may be logged along with a reason for the failure at operation 324. The candidate transaction may then be ignored at operation 306.

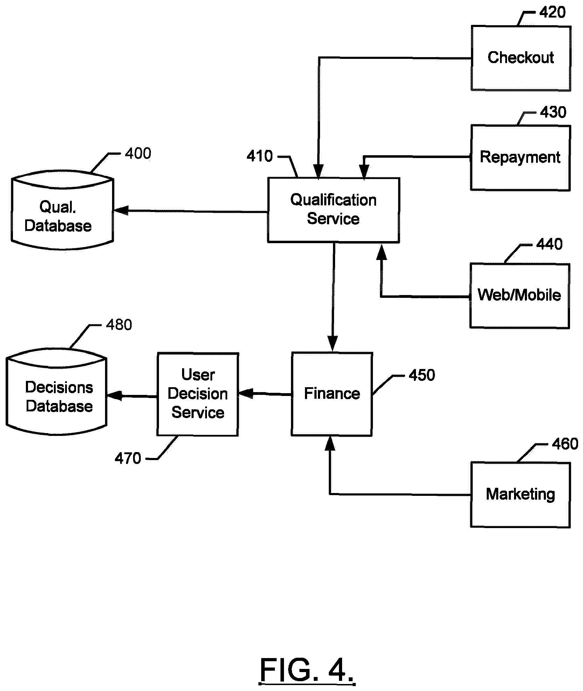

The method of FIG. 3 and the hardware described in reference to FIG. 2 are merely examples of methods and hardware that could be employed to implement example embodiments. Moreover, in some cases, various services or systems may cooperate to practice example embodiments, and different combinations of hardware and software may be employed to implement such services and systems. FIG. 4 is a block diagram of various systems interactions that may be employed to implement an early capture capability in accordance with an example embodiment.

As shown in FIG. 4, a qualification database 400 may store information associated with qualification of a plurality of users, each having a corresponding user account setup and maintained as described above. In an example embodiment, the qualification database 400 may be a portion of the database server 44 of FIG. 1, or implemented in memory 104 of FIG. 2. A qualification service 410 may interface with and update the qualification database 400. The qualification service 410 may be implemented from the payments platform 50.

Checkout information may be provided to the qualification service 410 by various checkout systems 420 associated with respective different vendors or websites. Repayment information may also be provided to the qualification service 410 by various repayment systems 430 associated with respective different vendors or websites. Web or mobile devices 440 may be examples of clients 20 that may interact with the qualification service 410 to set up user accounts and to initiate transactions (via the checkout systems 420) or may payments (via the repayment systems 430).

Finance system 450 may be employed to make financial decisions based on information from the qualification service 410, and to augment (or boost)transaction limits based on marketing information from a marketing system 460, which may indicate when particular boosts, enhancements, or incentives for various merchants are applicable. A user decision service 470 may be used to consider early capture as described above in reference to operations 300 to 330 in FIG. 3. All information resulting from these decisions may be recorded in decisions database 480.

As can be appreciated from the description above, while the user may be informed of each matching and early capture effort, and perhaps also the reason for any match or failure, no such informing is necessary to the proper functioning of the system. Indeed, the early capture may merely serve in the background to ensure that a user with funds remaining in his/her account to support financial transactions may have minimal times during which (due to ACH delays) the user is not able to engage in financial transactions. Such minimization of times when financial transactions are inhibited by credit holds on the user's account may incentivize the user to continue to exhibit behaviors that lead to increases in user satisfaction, and brand loyalty while also increasing volume of transactions for the facilitator without an appreciable increase in risk. The corresponding incentives and rewards may ultimately provide a technical means by which to create a win/win relationship between the entity and the user.

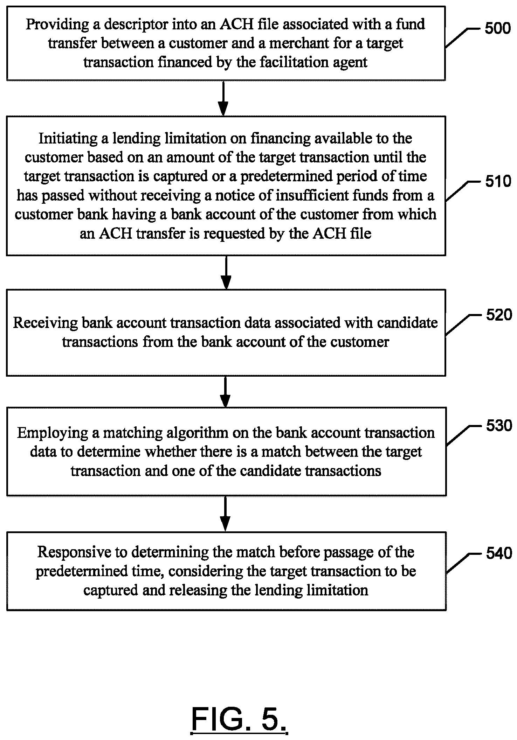

From a technical perspective, the payments platform 50 described above may be used to support some or all of the operations described above. As such, the apparatuses described in FIGS. 2 and 4 may be used to facilitate the implementation of several computer program and/or network communication based interactions. As an example, FIG. 5 is a flowchart of a method and program product according to an example embodiment of the invention. It will be understood that each block of the flowchart, and combinations of blocks in the flowchart, may be implemented by various means, such as hardware, firmware, processor, circuitry and/or other devices associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 42, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method for facilitating early capture of automated clearing house (ACH) transfers associated with transactions according to one embodiment of the invention is shown in FIG. 5. The method may be performed by a facilitation agent at a server, computer or other processing circuitry associated with a facilitator. The method may include providing a descriptor into an ACH file associated with a fund transfer between a customer and a merchant for a target transaction financed by the facilitation agent at operation 500, initiating a lending limitation on financing available to the customer based on an amount of the target transaction until the target transaction is captured or a predetermined period of time has passed without receiving a notice of insufficient funds from a customer bank having a bank account of the customer from which an ACH transfer is requested by the ACH file at operation 510, and receiving bank account transaction data associated with candidate transactions from the bank account of the customer at operation 520. The method may further include employing a matching algorithm on the bank account transaction data to determine whether there is a match between the target transaction and one of the candidate transactions at operation 530, and, responsive to determining the match before passage of the predetermined time, considering the target transaction to be captured and releasing the lending limitation at operation 540.

In an example embodiment, an apparatus for performing the method of FIG. 5 above may comprise a processor (e.g., the processor 102) or processing circuitry configured to perform some or each of the operations (500-540) described above. The processor may, for example, be configured to perform the operations (500-540) by performing hardware implemented logical functions, executing stored instructions, or executing algorithms for performing each of the operations. In some embodiments, the processor or processing circuitry may be further configured for additional operations or optional modifications to operations 500 to 540.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below. It should be appreciated that the modifications, optional operations and augmentations may each be added alone, or they may be added cumulatively in any desirable combination. In this regard, for example, providing the descriptor into the ACH file may include providing the descriptor into a batch header of the ACH file. In an example embodiment, the batch header may include a first portion including an entity identifier, and a second portion including an encoded string associated with the ACH file. Within this context, providing the descriptor into the batch header of the ACH file may include providing the descriptor as a predetermined formatting of the encoded string. In some example embodiments, the predetermined formatting may identify a date of the ACH transfer. In an example embodiment, the matching algorithm may determine the match responsive to determining a first correspondence between the entity identifier of the one of the candidate transactions and an identity of the facilitation agent, and applying a transaction specific correspondence check based on whether the descriptor is available in association with the target transaction. In some cases, the transaction specific correspondence check may include, responsive to the descriptor being available, determining a second correspondence in amount of the target transaction and the one of the candidate transactions, determining a third correspondence between date of the target transaction and the date of the ACH transfer, determining a fourth correspondence between a user identifier associated with the target transaction and an identity of the customer, and determining the match responsive to the first, second, third and fourth correspondences. Alternatively, the transaction specific correspondence check may include, responsive to the descriptor being available, determining a second correspondence in amount of the target transaction and the one of the candidate transactions, determining a third correspondence between a user identifier associated with the target transaction and an identity of the customer, and determining the match responsive to the first, second, and third correspondences. In an example embodiment, the facilitation agent may log each failure to determine the match along with a corresponding failure reason in a failure log. Alternatively or additionally, the facilitation agent may log each success in determining the match along with a corresponding success reason in a success log. In an example embodiment, the facilitation agent may apply machine learning to the failure log and the success log to modify the matching algorithm.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method for facilitating early capture of automated clearing house (ACH) transfers associated with transactions, the method comprising:
providing, by a facilitation agent, a descriptor into an ACH file associated with a fund transfer between a customer and a merchant for a target transaction financed by the facilitation agent;
initiating, by the facilitation agent, a lending limitation on financing available to the customer based on an amount of the target transaction until the target transaction is captured or a predetermined period of time has passed without receiving a notice of insufficient funds from a customer bank having a bank account of the customer from which an ACH transfer is requested by the ACH file;
receiving, by the facilitation agent, bank account transaction data associated with candidate transactions from the bank account of the customer;
employing, by the facilitation agent, a matching algorithm on the bank account transaction data to determine whether there is a match between the target transaction and one of the candidate transactions; and
responsive to determining the match before passage of the predetermined time, considering the target transaction to be captured and releasing the lending limitation.

2. The method of claim 1, wherein providing the descriptor into the ACH file comprises providing the descriptor into a batch header of the ACH file.

3. The method of claim 2, wherein the batch header comprises a first portion including an entity identifier, and a second portion including an encoded string associated with the ACH file, and
wherein providing the descriptor into the batch header of the ACH file comprises providing the descriptor as a predetermined formatting of the encoded string.

4. The method of claim 3, wherein the predetermined formatting identifies a date of the ACH transfer.

5. The method of claim 4, wherein the matching algorithm determines a match responsive to:
determining a first correspondence between the entity identifier of the one of the candidate transactions and an identity of the facilitation agent, and
applying a transaction specific correspondence check based on whether the descriptor is available in association with the target transaction.

6. The method of claim 5, wherein the transaction specific correspondence check comprises:
responsive to the descriptor being available, determining a second correspondence in amount of the target transaction and the one of the candidate transactions, determining a third correspondence between date of the target transaction and the date of the ACH transfer, determining a fourth correspondence between a user identifier associated with the target transaction and an identity of the customer, and determining the match responsive to the first, second, third and fourth correspondences.

7. The method of claim 5, wherein the transaction specific correspondence check comprises:
responsive to the descriptor being available, determining a second correspondence in amount of the target transaction and the one of the candidate transactions, determining a third correspondence between a user identifier associated with the target transaction and an identity of the customer, and determining the match responsive to the first, second, and third correspondences.

8. The method of claim 1, wherein the facilitation agent logs each failure to determine the match along with a corresponding failure reason in a failure log.

9. The method of claim 8, wherein the facilitation agent logs each success in determining the match along with a corresponding success reason in a success log.

10. The method of claim 9, wherein the facilitation agent applies machine learning to the failure log and the success log to modify the matching algorithm.

11. An apparatus for facilitating early capture of automated clearing house (ACH) transfers associated with transactions, the apparatus comprising processing circuitry configured to perform the method of any of claims 1-10.
